# EUROPÄISCHE PATENTSCHRIFT

(11) **EP 0 418 551 B1**
(45) Veröffentlichungstag und Bekanntmachung des Hinweises auf die Patenterteilung: **03.11.1993**
(21) Anmeldenummer: 90115624.0
(22) Anmeldetag: 16.08.1990
(51) Int. Cl.: A47B 96/14, B65G 1/02

(54) **Anbauregal od. dgl. Lagervorrichtung, insbesondere für Langgut**
Shelf unit or similar storage device, especially for long objects
Unité d'étagères ou dispositif de stockage similaire, surtout pour des objets longs

(30) Priorität: 12.09.1989 DE 3930391; 19.10.1989 DE 3934851
(43) Veröffentlichungstag der Anmeldung: 27.03.1991
(73) Patentinhaber: Sipag Storagesystems & Industrial Products AG, CH-8008 Zürich (CH)
(72) Erfinder: Berny, Roger, CH-8702 Zollikon (CH)
(74) Vertreter: Hiebsch, Gerhard F., Dipl.-Ing.

(56) Entgegenhaltungen:
- EP-A- 0 176 002
- WO-A-89/05595
- GB-A- 524 850
- GB-A- 956 820
- GB-A- 2 214 413

## Beschreibung

Die Erfindung betrifft ein Anbauregal od. dgl. Lagervorrichtung mit von etwa vertikalen Ständern etwa horizontal abragenden Kragarmen, insbesondere für die Lagerung von Langgut. Bei dieser Lagervorrichtung sind die Kragarme jeweils mit einem Ausnehmungen des Kragarmes und Durchbrüche der Stütze durchsetzenden bolzenartigen Organ an den Ständer angeschlossen, wobei das bolzenartige Organ quer zur Längsrichtung des Kragarmes verläuft.

Eine derartige Vorrichtung offenbart die Schrift zum DE-GM 19 49 343 anhand eines Anbauregales, dessen Kragarme jeweils mittels eines Schraubbolzens in einer Vertikalstütze festgelegt sind. In Abstand zu diesem Gelenkpunkt verläuft an der Außenseite der Vertikalstütze ein Vertikalschenkel des Tragarmprofiles als Abstützung. Hier hat sich als nachteilig erwiesen, daß es beim Zusammenbau des mit Fachböden für geringe Lasten ausgestatteten Regales eines genauen Fluchtens der Bohrungen im Kragarm und in der Vertikalstütze bedarf, um den Bolzen einschieben zu können. Auf diesen muß dann auch noch eine Mutter aufgebracht werden.

Ein schnell zusammenzufügendes Anbauregal bzw. ein Verbindungssystem dafür, das für Lagersysteme schwerer Lasten geeignet ist, beschreibt die DE-OS 31 03 983. Bei diesem Regal weisen sowohl die Durchbrüche der Stütze als auch die Ausnehmung des Kragarmes einen rechteckigen Querschnitt mit in Belastungsrichtung verlaufenden Seitenkanten auf, und das bolzenartige Organ ist als Keilprofil mit einem Querschnitt im wesentlichen in Form eines rechtwinkeligen Dreiecks ausgebildet, dessen Hypothenusenseite der Hypothenusenseite eines Keilprofils mit gegenläufig eingebrachtem, gleichförmigem, Querschnitt anliegt. Die am rechten Querschnittswinkel des Keilprofils liegende Längskante ist abgerundet und die bei dessen kleinstem Winkel liegende Längskante gebrochen.

Der Erfinder hat sich das Ziel gesetzt, Anbauregale oder Lagervorrichtungen der eingangs genannten Art in ihrem Aufbau zu vereinfachen und ihr Einsatzgebiet zu vermehren. Vor allem soll die Herstellung der Ständer optimiert werden.

Zur Lösung dieser Aufgabe führt, daß der die Kragarme aufnehmende Ständer zwei mit ihren offenen Seiten einander zugekehrte rinnenartige Profile sowie wenigstens ein diese in Abstand verbindendes Querorgan aufweist, welches beidends an einem Paar etwa fluchtender Profilschenkel festgelegt ist. Dabei ist wenigstens eine in die Profilstirnwand eingeformte Längssicke geringer Breite -- und gegenüber letzterer mehrfacher Tiefe -- von besonderer Bedeutung; diese Längssicke erhöht die Steifigkeit des Rinnenprofils entscheidend und erlaubt den Einsatz verhältnismäßig dünner Stahlbleche bei der Profilerzeugung.

Das erfindungsgemäße Rinnen- oder U-Profil wird im Bereich wenigstens eines Profilschenkels mit den genannten Querorganen, die entweder sprossenartige Querstreifen oder durchgehende Querplatten sind, versehen und über diese an ein zweites U-Profil angeschlossen. Dabei bestimmt die horizontale Breite der Querorgane die Breite des fertigen Ständers.

Als besonders günstig hat es sich erwiesen, daß dank der beschriebenen Konstruktion ohne besonderen Aufwand Ständer mit aufwärts abnehmender Breite hergestellt werden können.

Bezüglich weiterer -- insbesondere den festen oder lösbaren Anschluß der Querorgane an die Profile betreffender -- Merkmale sei auf die Unteransprüche verwiesen.

Die bevorzugten Profilbreiten sind 102 mm und 152 mm bei jeweils etwa 3 mm Blechdicke und einer Tiefe der Längssicke von 20 bis 24 mm. Die Schenkellängen messen dann etwa 100 mm. In besondern Belastungsfällen können noch beidseits der Längssicke an die Innenseite der Profilstirnwand Flachstahlstreifen zur Verstärkung angeschweißt werden.

Weitere Vorteile und Einzelheiten der Erfindung ergeben sich aus der nachfolgenden Beschreibung bevorzugter Ausführungsbeispiele sowie anhand der Zeichnung. Diese zeigt in
- Fig. 1: eine Schrägsicht auf ein Regalsystem mit vertikal gerichteten Ständern an Horizontalstützen sowie mit Tragarmen;
- Fig. 2: die gegenüber Fig. 1 vergrößerte Seitenansicht eines Ständers in zwei Ausführungsformen;
- Fig. 3: die Frontansicht zu Fig. 2;
- Fig. 4: ein vergrößertes Detail aus Fig. 1 in Seitenansicht;
- Fig. 5: den Horizontalschnitt durch ein Profil des Ständers nach Linie V - V der Fig. 2 in etwa natürlicher Größe für zwei Ausführungsformen;
- Fig. 6: einen Querschnitt etwa nach Linie VI - VI in Fig. 2 durch zwei unterschiedliche Ausführungen;
- Fig. 7: eine teilweise Seitenansicht zu Fig. 6.
- Fig. 8:: eine andere Ausführung zu Fig. 2;
- Fig. 9:: die Draufsicht auf ein Halbzeug für Profile.

Ein Regalsystem 10 für aus Gründen der Übersichtlichkeit in der Zeichnung nicht dargestelltes Langgut -- wie Stangen, Profile, Platten od. dgl. -- weist von einseitigen Horizontalstützen 12ₕ oder doppelseitigen Horizontalstützen 12 aufragende Ständer 14 mit daran lösbar festgelegten Kragarmen 16 auf.

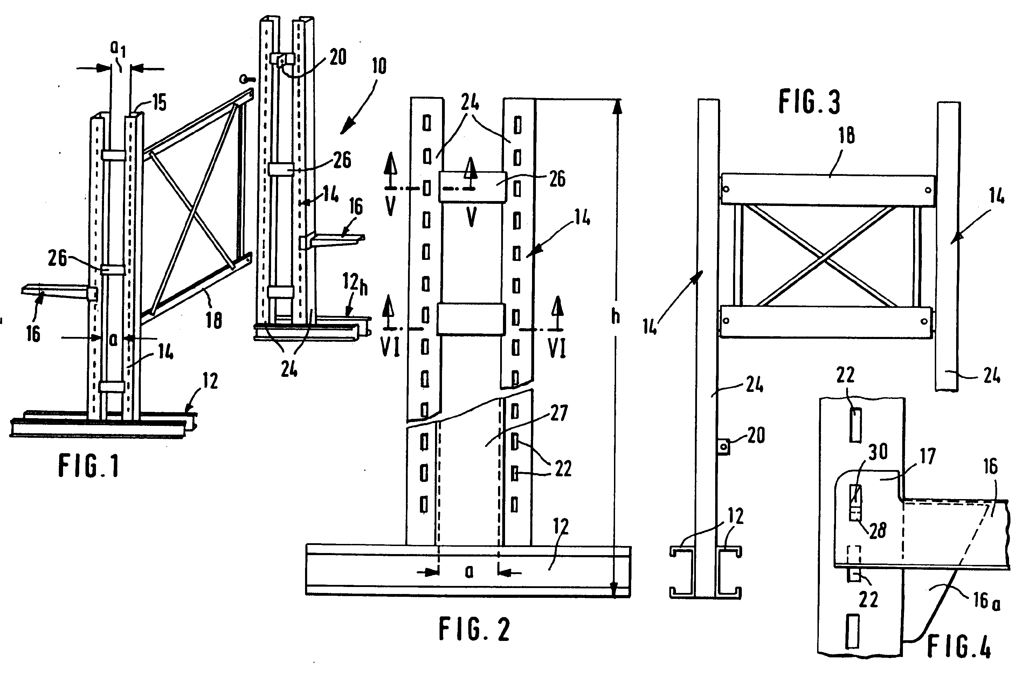

Jeweils zwei Ständer 14 sind durch Fachwerkrahmen 18 verbunden, die an Seitenlaschen 20 der Ständer 14 angeschraubt sind. Jeder der Ständer 14 ist gemäß Fig. 1 aus zwei mit vertikalen Schlitzen 22 versehenen -- mit ihren Öffnungen zueinander gerichteten Rinnen -- oder U-Profilen 24 und diese horizontal verbindenden Querblechen 26 zusammengesetzt, der untere Profilabstand a ist länger als der obere Profilabstand ₁, d. h. der Ständer 14 verjüngt sich zu seinem oberen Ende 15 hin.

In die Schlitze 22 der U-Profile 24 sowie in entsprechende Durchbrüche 28 von Schenkellaschen 17 des Kragarmes 16 werden gemäß Fig. 4 Paare von Keilprofilen 30 jeweils dreiecksförmigen Querschnittes zueinander gegenläufig als Verbindungsglieder eingesetzt. Zugeordnete Stützkonsolen sind mit 16ₐ bezeichnet Ansonsten sind nähere Einzelheiten dazu der DE-OS 31 03 983 zu entnehmen.

Bei einem in Fig. 2, unten, angedeuteten Ausführungsbeispiel ist statt der sprossenähnlichen Querbleche 26 eine durchgehende Querplatte 27 angebracht, so daß ein innenseitig offener -- oder bei Einsatz eines Querplattenpaares -- geschlossener Kasten entsteht, der -- wie beschrieben -- einen konische Verlauf haben kann.

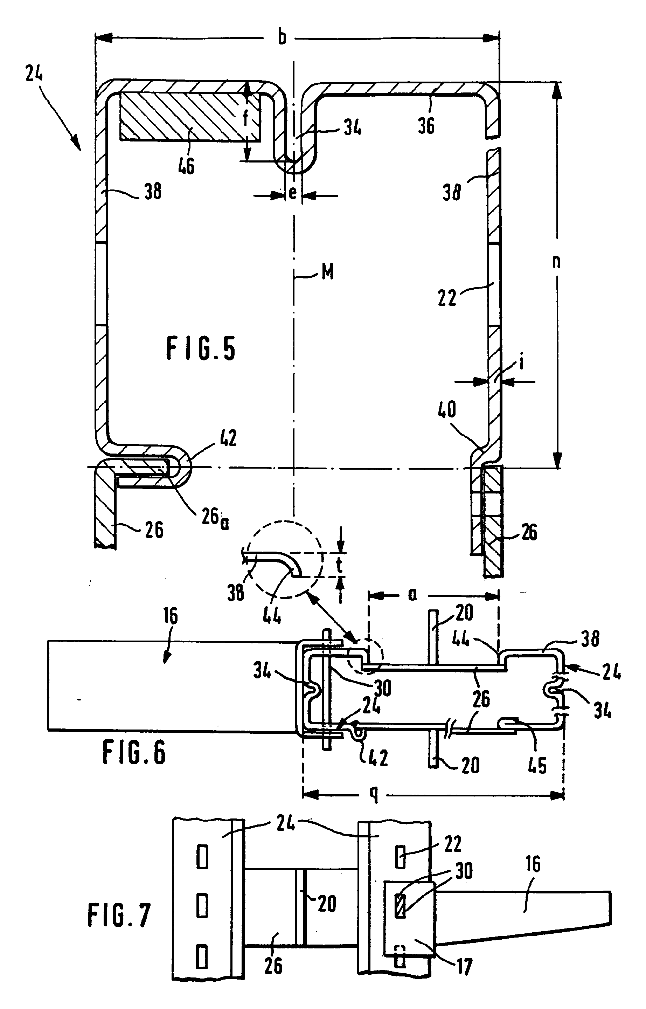

Gemäß Fig. 5 is das auch Blech einer Dicke i von beispielsweise 3 mm gerollte U-Profil 24 in seiner Symmetrielinie M mit einer Sicke 34 in Längsrichtung versehen. Die Breite e dieser Längssicke 34 entspricht etwa jener Dicke i, ihre Tiefe f mißt 20 mm bei einer Profilbreite b von etwa 100 mm. Wird die profilbreite b geändert (z. B. auf 150 mm), so bleibt doch die Breite bzw. Enge e der Längssicke 34 erhalten. Letztere stabilisiert das gesamte U-Profil 24 und ermöglicht die Aufnahme wesentlich höherer Lastkräfte. Diese trachten, die Unterkanten der Schenkellaschen oder Schuhe 17 in die U-Profile 24 zu treiben; dies wird durch die Längssicke 34 hintangehalten.

Die beiden an die Profilstirnwand 36 anschließenden Profilschenkel 38 einer Länge n von etwa 100 mm sind endwärts mit einer Kröpfung 40 oder einer Endsicke 42 ausgestattet; an beide -- 40, 42 -- werden die Querbleche 26 oder die Querplatten 27 beispielsweise durch Verschrauben, Verschweißen -- oder durch Einstecken einer Winkelkante 26ₐ in die Endsicke 42 -- angeschlossen.

Gemäß einem Ausführungsbeispiel der Fig. 6 kann die Endsicke 42 -- nicht wie in Fig. 5 nach innen, sondern: -- nach außen gerichtet sein; dann werden die Querbleche 20 innenseitig angeschweißt oder eingesteckt. Bei der zweiten Ausführung nach Fig. 6, oben, sind die Profilschenkel 38 endwärts umgekanten und bieten Innenflansche 44 zum Anschweißen der Querbleche 26 an. Ein an Fig. 6 vergrößertes Detail zeigt einen teilkreisförmig gebogenen Innenflansch 44 der Außenlänge t von 6 mm. Bei der Ausführungsform unten rechts in Fig. 6 ist das Schenkelende 45 nach innen gebogen und an die Schenkelinnenfläche angelegt - dieses Beispiel führt mit dem Querblech 26 zu einem dreilagig verschweißten stabartigen Bereich.

Der Profilschenkel 38 ist hier aus 2 mm Blech geformt mit einer profilbreite b von 102 mm bei einer Breite e der Längssicke 34 von etwa Blechdicke i; auch bei stärkeren Blechdicken i wird die Sickenbreite e entsprechend dem Maß i gewählt werden.

Die Gesamtbreite q der Ständer 14 mißt bei Lasten von 2000 kg und 4500 kg in Bodennähe zwischen 250 und 350 mm bei Höhen h von etwa 4 m bis über 6 m. Ein solcher Ständer 14 von etwa 4 m Höhe h₁ verjüngt sich dabei in Fig. 1 beispielsweise von 250 mm auf 190 mm bzw. um 15 mm je Meter seiner Höhe. Zur Verstärkung der U-Profile 24 können in diesen innenseitig noch Flachprofile 46 angebracht sein.

In allen Fällen ergibt sich ein Regelsystem 10 äußerst hoher Stabilität selbst dann, wenn die Blechdicke i verhältnismäßig gering ist. Zudem können die eingesetzten Rinnen oder U-Profile 24 auf unkomplizierte Weise rollgeformt od. dgl. werden.

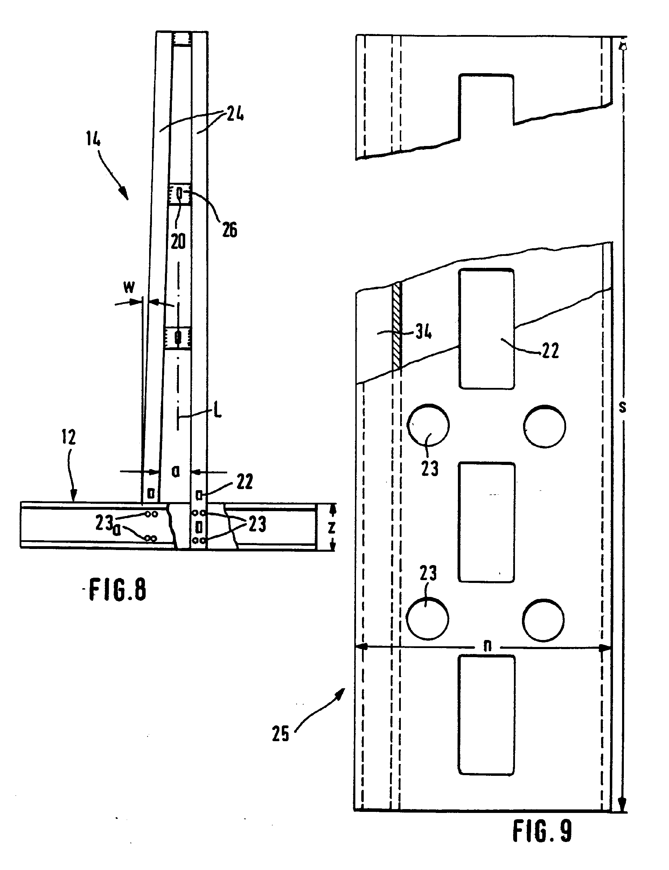

Die U-Profile 24 des Ständers 14 der Fig. 8 sind jeweils in einem Winkel w von etwa 0,5° zur vertikalen Längsachse L geneigt, was etwa 1,75 % einer Höhe h von 4000 mm entspricht.

Im Bereich der Höhe z der Horizontalstützen 12 sind hier im U-Profil 24 vier Bohrungen 23 für nicht dargestellte Verbindungsschrauben (M 16 x 25) vorgesehen, die entsprechende Löcher 23ₐ in der Horizontalstütze 12 durchsetzen.

Fig. 9 zeigt einen Profilstrang 25 einer beispielsweisen Länge s von 12 037 mm, von dem die U-Profile 24 abgelängt werden.

## Patentansprüche

1. Anbauregal od. dgl. Lagervorrichtung, mit von etwa vertikalen Ständern (14) etwa horizontal abragenden Kragarmen (16), insbesondere für die Lagerung von Langgut, bei dem/der die Kragarme jeweils mit einem Ausnehmungen (28) des Kragarms (16) und Durchbrüche (22) des Ständers (14) durchsetzenden bolzenartigen Organ (30) an den Ständer angeschlossen sind, wobei das bolzenartige Organ quer zur Längsrichtung des Kragarmes verläuft,
dadurch gekennzeichnet,
daß der die Kragarme (16) aufnehmende Ständer (14) zwei mit ihren offenen Seiten einander zugekehrte rinnenartige Profile (24) und wenigstens eine diese in Abstand (a) verbindendes Querorgan (26,27) aufweist, welches beidends an einem Paar etwa fluchtender Profilschenkel (38) festgelegt ist.

2. Anbauregal nach Anspruch 1, dadurch gekennzeichnet, daß das rinnenartige Profil (24) in seiner Profilstirnwand (36) mit wenigstens einer zum Profilinneren gerichteten Längssicke (34) versehen ist, die etwa parallel zu den an die Profilstirnwand anschließenden Profilschenkeln (38) verläuft.

3. Anbauregal nach Anspruch 1 oder 2, dadurch gekennzeichnet, daß die Breite (e) der Längssicke (34) etwa der Dicke (i) der Profilwandungen (36,38) entspricht und/oder daß die Tiefe (f) der Längssicke (34) zumindest deren sechsfachen Breite (e) entspricht.

4. Anbauregal nach einem der Ansprüche 1 bis 3, dadurch gekennzeichnet, daß die Längssicke (34) in der Mittellinie (M) des Profiles (24) verläuft.

5. Anbauregal nach einem der Ansprüche 1 bis 4, dadurch gekennzeichnet, daß wenigstens einer der Profilschenkel (38) des Profiles (24) eine quer zur Profilmittellinie (M) gerichtete Endsicke (42) zum Anschluß eines Querorgans (26,27) aufweist, wobei gegebenenfalls in die Endsicke (42) eine Winkelkante (26ₐ) od. dgl. des Querorgans (26,27) einsetzbar ist.

6. Anbauregal nach wenigstens einem der Ansprüche 1 bis 5, dadurch gekennzeichnet, daß wenigstens einer der Profilschenkel (38) des Profils (24) eine nach außen gerichtete Endsicke (42) aufweist, an die innenseitig das Querorgan (26,27) angeschweißt ist, wobei gegebenenfalls die Breite der Endsicke (42) der Breite (e) der Längssicke (34) entspricht.

7. Anbauregal nach wenigstens einem der Ansprüche 1 bis 6, dadurch gekennzeichnet, daß von wenigstens einem der Profilschenkel (38) des Profils (24) ein Innenflansch (44) abgewinkelt und mit einem Querorgan (26,27) verbunden ist, oder daß das Ende (45) des Profilschenkels (38) bis zur Anlage an diesen umgekantet ist und mit dem Querorgan (26,27) einen dreilagigen Streifen bildet, oder daß wenigstens einer der Profilschenkel (38) des Profils (24) als Anschlag für ein Querorgan (26,27) eine nach innen versetzte Kröpfung (40) aufweist, wobei das Querorgan bevorzugt angeschraubt ist.

8. Anbauregal nach wenigstens einem der Ansprüche 1 bis 7, dadurch gekennzeichnet, daß die Querorgane sprossenartig angeordnete Querstreifen (26) oder durchgehende Querplatten (27) sind.

9. Anbauregal nach wenigstens einem der Ansprüche 1 bis 8, gekennzeichnet durch Verstärkungsstreifen (46) an der Innenseite der Profilstirnwand (36), die beidseits der Längssicke (34) verlaufen.

10. Anbauregal nach wenigstens einem der Ansprüche 1 bis 9, dadurch gekennzeichnet, daß sich der Ständer (14) in der von seinen Kragarmen (16) bestimmten Ebene von einer fußartigen Horizontalstütze (12,12ₕ) ab aufwärts verjüngt.

11. Anbauregal nach wenigstens einem der Ansprüche 1 bis 10, dadurch gekennzeichnet, daß das Profil (24) zur Längsachse (L) des Ständers (14) in einem Winkel (w) von etwa 0,5° geneigt ist.

12. Anbauregal nach wenigstens einem der Ansprüche 1 bis 11, dadurch gekennzeichnet, daß jeweils zwei Profile (24) mit Horizontalstützen (12) verschraubt sind, wobei gegebenenfalls das rinnenartige Profil (24) und die Horizontalstütze (12) von einem bevorzugt rollgeformten Profilstrang (25) abgelängt sind, der mit Bohrungen (23) für die Verschraubung/en sowie mit Durchbrüchen (26) für die Querorgane (27) ausgestattet ist.

## Claims

1. Shelf unit or similar storage device, comprising cantilever brackets (16) projecting in a substantially horizontal manner from substantially vertical uprights (14), especially for storing long objects, wherein the cantilever brackets are each connected to the respective upright via a bolt-shaped member (30) traversing recesses (28) in the cantilever bracket (16) and openings (22) in the upright (14), the bolt-shaped member extending transversely with respect to the longitudinal direction of the cantilever bracket, characterised in that the upright (14) receiving the cantilever brackets (16) has two channel-shaped profile sections (24) with their open sides facing one another and at least one transverse member (26, 27) which connects these profile sections at a spacing (a) and is fixed at either end to a pair of substantially aligned profile arms (38).

2. Shelf unit according to claim 1, characterised in that the channel-shaped profile section (24) is provided in its profile end wall (36) with at least one longitudinal corrugation (34) which is directed towards the interior of the profile section and extends substantially parallel to the profile arms (38) connected to the profile end wall.

3. Shelf unit according to claim 1 or claim 2, characterised in that the width (e) of the longitudinal corrugation (34) corresponds substantially to the thickness (i) of the profile walls (36, 38) and/or that the depth (f) of the longitudinal corrugation (34) corresponds to at least six times its width (e).

4. Shelf unit according to one of claims 1 to 3, characterised in that the longitudinal corrugation (34) extends along the centre line (M) of the profile section (24).

5. Shelf unit according to one of claims 1 to 4, characterised in that at least one of the profile arms (38) of the profile section (24) has an end corrugation (42) directed transversely with respect to the centre line (M) of the profile section for the connection of a transverse member (26, 27), wherein an angular edge (26ₐ) or the like of the transverse member (26, 27) can optionally be inserted into the end corrugation (42).

6. Shelf unit according to at least one of claims 1 to 5, characterised in that at least one of the profile arms (38) of the profile section (24) has an outwardly directed end corrugation (42) to the inner face of which the transverse member (26, 27) is welded, the width of the end corrugation (42) optionally corresponding to the width (e) of the longitudinal corrugation (34).

7. Shelf unit according to at least one of claims 1 to 6, characterised in that an inner flange (44) is bent over from at least one of the profile arms (38) of the profile section (24) and is connected to a transverse member (26, 27), or that the end (45) of the profile arm (38) is turned over until it bears against the latter and, together with the transverse member (26, 27), forms a three-layer strip, or that at least one of the profile arms (38) of the profile section (24) has an inwardly offset bend (40) as a stop for a transverse member (26, 27), the transverse member preferably being screwed thereto.

8. Shelf unit according to at least one of claims 1 to 7, characterised in that the transverse members are transverse strips (26) in a lattice arrangement or continuous transverse plates (27).

9. Shelf unit according to at least one of claims 1 to 8, characterised by reinforcing strips (46) on the inner face of the profile end wall (36) which extend on either side of the longitudinal corrugation (34).

10. Shelf unit according to at least one of claims 1 to 9, characterised in that the upright (14) tapers upwards from a foot-shaped horizontal support (12, 12ₕ) in the plane defined by its cantilever brackets (16).

11. Shelf unit according to at least one of claims 1 to 10, characterised in that the profile section (24) is inclined at an angle (w) of approximately 0.5° with respect to the longitudinal axis (L) of the upright (14).

12. Shelf unit according to at least one of claims 1 to 11, characterised in that each two profile sections (24) are screwed to horizontal supports (12), the channel-shaped profile section (24) and the horizontal support (12) optionally being cut to length from a preferably rolled profile bar (25) which is provided with bores (23) for the screw(s) and with openings (26) for the transverse members (27).

## Revendications

1. Rayonnage par éléments ou dispositif de stockage équivalent, comprenant des bras en consoles (16) qui font saillie à peu près horizontalement sur des montants (14) à peu près verticaux, notamment pour le stockage de produits de grande longueur, dans lequel chaque bras en console est fixé au montant au moyen d'un organe (30) en forme de goupille, qui traverse des évidements (28) du bras en console (16) et des ouvertures (22) du montant (14), l'organe en forme de goupille s'étendant transversalement à la direction longitudinale du bras en console,
caractérisé
en ce que le montant (14) qui porte les bras en consoles (16) présente deux profilés (24) en forme de gouttière, dirigés l'un vers l'autre par leur côté ouvert, et au moins une traverse (26, 27) qui réunit ces derniers à un certain écartement (a) et qui est fixé à ses deux extrémités à une paire d'ailes (38) des profilés qui sont à peu près dans l'alignement l'une de l'autre.

2. Rayonnage selon la revendication 1, caractérisé en ce que le profilé (24) en forme de gouttière est muni, dans sa paroi frontale (36) d'au moins une moulure plissée longitudinale (34) dirigée vers l'intérieur du profilé, qui s'étend à peu près parallèlement aux ailes (28) du profilé qui se raccordent à la paroi frontale du profilé.

3. Rayonnage selon la revendication 1 ou 2, caractérisé en ce que la largeur (e) de la moulure plissée longitudinale (34) correspond à peu près à l'épaisseur (i) des parois (36, 38) du profilé et/ou en ce que la profondeur (f) de la moulure plissée longitudinale (34) correspond au moins à six fois sa largeur (e).

4. Rayonnage selon une des revendications 1 à 3, caractérisé en ce que la moulure plissée longitudinale (34) s'étend selon l'axe médian (M) du profilé (24).

5. Rayonnage selon une des revendications 1 à 4, caractérisé en ce qu'au moins une des ailes (38) du profilé (24) présente une moulure plissée d'extrémité (42) dirigée transversalement par rapport à l'axe médian (M) du profilé, pour le raccordement d'une traverse (26, 27), un bord rabattu (26ₐ) ou équivalent de la traverse (26, 27) pouvant être éventuellement emboîté dans la moulure plissée d'extrémité (42).

6. Rayonnage selon au moins une des revendications 1 à 5, caractérisé en ce qu'au moins une des ailes (38) du profilé (24) présente une moulure plissée d'extrémité (42) dirigée vers l'extérieur, à laquelle la traverse (26, 27) est soudée sur sa surface interne, la largeur de la moulure plissée d'extrémité (42) correspondant éventuellement à la largeur (e) de la moulure plissée longitudinale (34).

7. Rayonnage selon au moins une des revendications 1 à 6, caractérisé en ce qu'une nervure intérieure (44) est rabattue à partir d'au moins une des ailes (38) du profilé (24), et est fixée à une traverse (26, 27), ou en ce que l'extrémité (45) de l'aile (38) du profilé est repliée jusqu'à venir en appui contre cette aile et forme une bande à trois couches avec la traverse (26, 27), ou en ce qu'au moins une des ailes (38) du profilé (24) présente, comme butée pour une traverse (26, 27) une forme contre-coudée (40) déportée vers l'intérieur, la traverse étant de préférence boulonnée.

8. Rayonnage selon au moins une des revendications 1 à 7, caractérisé en ce que les traverses sont des bandes transversales (26) disposées en échelons ou des plaques transversales continues (27).

9. Rayonnage selon au moins une des revendications 1 à 8, caractérisé par des bandes de renforcement (46) prévues sur la face interne de la paroi frontale (36) du profilé, qui s'étendent des deux côtés de la moulure plissée longitudinale (34).

10. Rayonnage selon au moins une des revendications 1 à 9, caractérisé en ce que le montant (14) se rétrécit vers le haut dans le plan défini par ses bras en consoles (16), à partir d'un appui horizontal (12, 12ₕ), formant pied.

11. Rayonnage selon au moins une des revendications 1 à 10, caractérisé en ce que le profilé (24) est incliné selon un angle (w) d'environ 0,5° par rapport à l'axe longitudinal (L) du montant (14).

12. Rayonnage selon au moins une des revendications 1 à 11, caractérisé en ce que deux profilés (24) sont boulonnés sur les appuis horizontaux (12), le profilé (24) en forme de gouttière et l'appui horizontal (12) étant découpés dans une longueur de profilé (25) qui est de préférence formée par repoussage aux rouleaux, et est munie de perçages (23) pour le boulonnage ou les boulonnages, ainsi que d'ouvertures (26) pour les traverses (27).
